# FASCICULE DE BREVET EUROPEEN

(11) **EP 0 754 270 B1**
(45) Date de publication et mention de la délivrance du brevet: **10.06.1998**
(21) Numéro de dépôt: 95914424.7
(22) Date de dépôt: 27.03.1995
(51) Int. Cl.: F02F 3/00, F16J 9/00

(54) **MACHINE AVEC CYLINDRE ET PISTON, AINSI QUE SEGMENT D'ETANCHEITE DE PISTON DESTINE A UNE TELLE MACHINE**
MASCHINE MIT KOLBEN, ZYLINDER UND KOLBENRING
MACHINE HAVING A CYLINDER AND A PISTON, AND PISTON RING SEAL THEREFOR

(30) Priorité: 01.04.1994 FR 9404254
(43) Date de publication de la demande: 22.01.1997
(73) Titulaire: Chatelain, Michel, 74940 Annecy-le-Vieux (FR)
(72) Inventeur: Chatelain, Michel, 74940 Annecy-le-Vieux (FR)
(74) Mandataire: Hud, Robert
(86) Numéro de dépôt international: FR9500379
(87) Numéro de publication internationale: WO9527132

(56) Documents cités:
- DE-A- 3 520 668
- PATENT ABSTRACTS OF JAPAN vol. 8 no. 76 (M-288) ,9 Avril 1984 & JP,A,58 221069 (NAOJI ITSUSHIKI) 22 Décembre 1983,

## Description

La présente invention concerne, de manière générale, les machines comportant au moins un corps avec au moins un cylindre et un piston monté dans l'alésage de ce dernier. Répondent à cette définition, les moteurs thermiques, les compresseurs, les pompes à vide, etc.

Plus particulièrement, la présente invention se réfère aux segments d'étanchéité, avec la face du cylindre appelée ci-après face extérieure, et la face opposée du piston, appelée ci-après face intérieure.

De manière générale et connue en soi, pour l'étanchéité entre piston et cylindre, il est connu de ménager au moins une gorge annulaire dans le piston, dans laquelle est disposé un segment annulaire d'étanchéité. Ce dernier se présente en général sous la forme d'un anneau métallique relativement mince, délimité entre deux faces planes ménageant entre elles et perpendiculairement un chant extérieur rodé, et présentant une dimension radiale entre ses bordures circulaires, intérieure et extérieure, relativement faible.

De manière à permettre, d'une part le montage du segment sur le piston, et d'autre part sans jeu sur ce dernier, du fait de sa dilatation, ce segment est discontinu selon sa circonférence, et présente une fente radiale.

De manière à améliorer l'étanchéité entre piston et cylindre, il est connu de disposer sur ledit piston, plusieurs gorges annulaires superposées, comportant respectivement plusieurs segments annulaires d'étanchéité.

Cette dernière solution présente différents inconvénients.

La multiplication des segments d'étanchéité ne suffit pas, pour améliorer dans des proportions importantes l'étanchéité vis-à-vis de la face extérieure.

Cette disposition mobilise en hauteur une partie non négligeable du piston, de telle sorte qu'il est difficile, dans ces conditions, de limiter la dimension axiale ou hauteur dudit piston.

Et cette solution ne permet pas de toute façon d'assurer une étanchéité vis-à-vis de la face intérieure, c'est-à-dire de la surface du piston.

La présente invention a pour objet de remédier à ces inconvénients.

La présente invention a pour objet plus particulièrement une solution permettant de limiter la hauteur du piston, tout en assurant une meilleure étanchéité, avec une pression uniforme sur la face à étancher, en particulier vis-à-vis de la face intérieure.

Le document DE-A-3520668 décrit une machine comportant un corps avec au moins un cylindre, au moins un piston monté dans l'alésage du cylindre et comportant au moins une gorge annulaire dans laquelle est disposé un segment annulaire d'étanchéité, ledit piston comprenant deux parties montées l'une sur l'autre de manière amovible, déterminant entre elles un plan de joint, perpendiculaire à l'axe du piston et du cylindre, avec une gorge annulaire contenant le plan de joint, ledit segment annulaire d'étanchéité comportant une rondelle pourvue de fentes radiales borgnes, régulièrement alternées et espacées débouchant une fois sur le diamètre intérieur, puis sur le diamètre extérieur et ainsi de suite pour découper uniformément toute la surface de la rondelle.

Selon l'invention une machine comporte un corps avec au moins un cylindre, au moins un piston monté dans l'alésage du cylindre et comportant au moins une gorge annulaire dans laquelle est disposé un segment annulaire d'étanchéité, le dit piston comprenant deux parties montées l'une sur l'autre de manière amovible, déterminant entre elles un plan de joint, perpendiculaire à l'axe du piston et du cylindre, avec une gorge annulaire contenant le plan de joint, le dit segment d'étanchéité comportant une rondelle pourvue de fentes radiales borgnes, régulièrement alternées et espacées débouchant une fois sur le diamètre intérieur, puis sur le diamètre extérieur et ainsi de suite pour découper uniformément toute la surface de la rondelle. Elle se caractérise en ce que le segment d'étanchéité est un segment multiple formant bague continue d'étanchéité et comprenant un empilement d'au moins deux rondelles élémentaires d'étanchéité pourvues chacune des dites fentes radiales borgnes, les dites rondelles élémentaires étant liées angulairement l'une à l'autre, continues selon leurs circonférences respectives, et délimitées chacune entre deux bordures circulaires, le dit segment multiple étant monté à plat de manière libre en rotation dans la gorge entre les deux parties du piston, et les dites rondelles étant placées l'une sur l'autre et positionnées angulairement l'une par rapport à l'autre pour que les fentes de l'une soient fermées par les parties pleines de l'autre, de façon à former une étanchéité continue sur la circonférence du diamètre intérieur ou du diamètre extérieur du segment multiple ainsi formé, le positionnement d'une rondelle par rapport à l'autre rondelle étant obtenu par tout moyen mécanique, de préférence par un ou plusieurs points de soudure laser ou autre.

L'invention concerne aussi un segment d'étanchéité annulaire pour machine, comprenant une rondelle pourvue de fentes radiales borgnes régulièrement alternées et espacées débouchant une fois sur le diamètre intérieur, puis sur le diamètre extérieur et ainsi de suite pour découper uniformément toute la surface de la rondelle. Ce segment d'étanchéité se caractérise en ce qu'il constitue un segment d'étanchéité multiple comprenant un empilement d'au moins deux rondelles élémentaires d'étanchéité liées angulairement l'une à l'autre, continues selon leurs circonférences respectives et délimitées chacune entre deux bordures circulaires, les dites rondelles étant pourvues des dites fentes radiales borgnes, étant placées l'une sur l'autre et positionnées angulairement l'une par rapport à l'autre pour que les fentes de l'une soient fermées par les parties pleines de l'autre, de façon à former une étanchéité continue sur la circonférence du diamètre intérieur ou du diamètre extérieur du segment multiple ainsi formé, le positionnement angulaire d'une rondelle par rapport à l'autre rondelle étant obtenu par tout moyen mécanique, de préférence par un ou plusieurs points de soudure laser ou autre, chaque rondelle étant découpée dans un matériau élastique comme par exemple un acier à ressorts, cet acier traité avant ou après découpe assurant l'élasticié propre à chaque rondelle qui compose un segment multiple, et cette élasticité permettant une flexion élastique entre chaque fente et cette flexion élastique absorbant les dilatations et les écarts de diamètres entre le diamètre à étancher et le diamètre correspondant du segment.

Grâce à la solution selon l'invention, chaque segment d'étanchéité est dimensionné, quant à sa bordure circulaire extérieure, pour assurer son étanchéité vis à vis de la face intérieure du cylindre.

De même chaque segment d'étanchéité est dimensionné quant à sa bordure circulaire intérieure, pour assurer son étanchéité vis à vis du diamètre d'un arbre.

Dans les deux cas, la gorge du segment en deux pièces autorise un montage aisé de celui-ci.

La présente invention apporte encore les avantages déterminants suivants.

Un segment multiple d'étanchéité selon l'invention peut être fabriqué, avec une très grande précision, sans outillage particulier, et dans un délai très court, par découpe, par exemple par découpe laser, dans une plaque d'acier traité par exemple.

Ses dimensions peuvent être déterminées et ajustées, par exemple avec un léger serrage sur la face à étancher,pour assurer une étanchéité à plat, par rapport à la face extérieure et/ou intérieure, et ceci sans bandage important, par exemple en forme de poire, ou déformation radiale.

Le segment multiple selon l'invention peut être monté très facilement, sans risque de blessure de l'opérateur.

En prévoyant une bordure intérieure du segment multiple, ayant un rayon légèrement supérieur au rayon du bord intérieur de la gorge annulaire, il est possible de ménager un interstice entre le segment et le piston, permettant la lubrification sous pression dudit segment.

La largeur radiale de chaque segment élémentaire, c'est-à-dire sa dimension radiale comprise entre ses bordures intérieure et extérieure, peut être beaucoup plus importante que pour les segments usuels, de telle sorte que l'on peut avoir une meilleure dissipation thermique vers le piston, dans le cas de moteurs thermiques par exemple.

A épaisseur égale, un segment multiple d'étanchéité selon l'invention assure une meilleure étanchéité, par son chant extérieur uniquement, et il s'use beaucoup plus lentement, sans prendre de jeu important au cours du temps.

Un segment multiple selon l'invention ne nécessite pas de positionnement angulaire particulier, notamment s'il est monté sur le piston d'un moteur deux temps.

La présente invention est maintenant décrite par référence au dessin annexé, dans lequel :
- la figure 1 représente, en vue éclatée, un segment multiple selon l'invention ;
- la figure 2 représente, en vue éclatée, un piston sur lequel est monté le segment multiple de la figure 1 ;
- la figure 3 représente, en coupe axiale, une machine comportant un corps avec un piston et un segment multiple d'étanchéité selon l'invention.

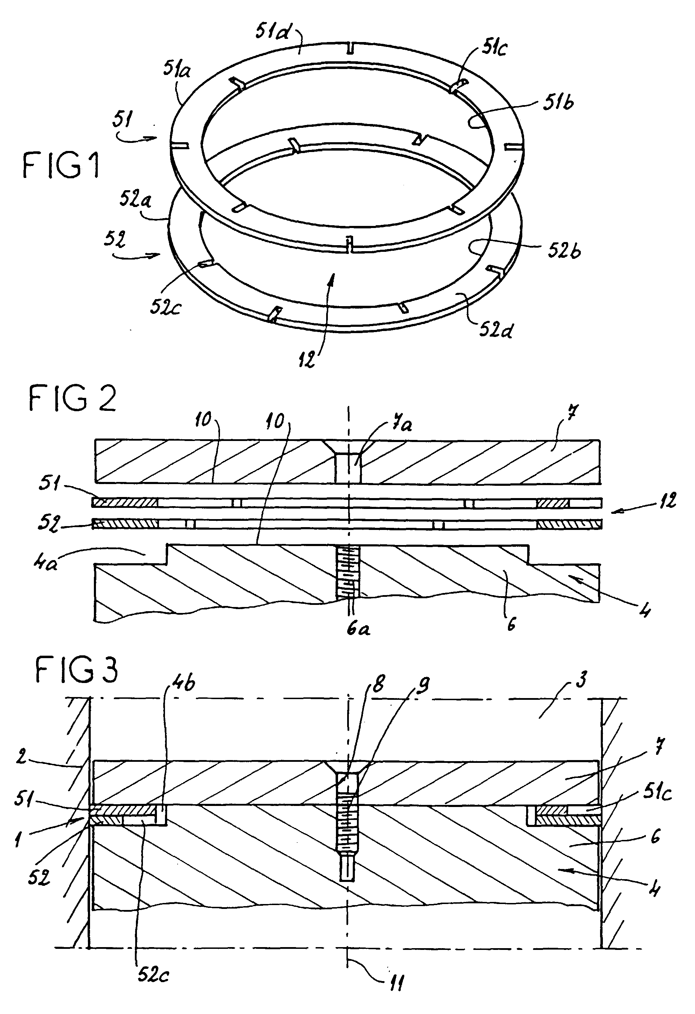

Conformément à la figure 3, la machine 1 considérée selon l'invention comporte de manière générale un corps 2 avec au moins un cylindre 3, et un piston 4 monté dans l'alésage du cylindre. Le piston 4 comprend deux parties 6 et 7, montées l'une sur l'autre de manière amovible, grâce à des moyens de fixation 8, consistant dans le cas présent, en un taraudage 6a prévu sur la partie inférieure du piston 4, avec un alésage coaxial 7a prévu sur la partie supérieure 7 du piston, et une vis 9 réunissant par vissage les parties 6 et 7 (cf. figure 3). Les deux parties 6 et 7 du piston 4 déterminent une seule gorge annulaire débouchante 4a, contenant le plan de joint 10 entre les parties 6 à 7 du piston 4.

Conformément à la figure 1, il est prévu un segment multiple consistant en un empilement 12, comprenant dans le cas présent, deux segments élémentaires 51 et 52 d'étanchéité, le segment multiple 51,52 est monté à plat, de manière libre en rotation, dans la gorge 4a, entre les deux parties 6 et 7 du piston, grâce aux moyens de fixation amovible décrits ci-dessus, sous la référence générale 8.

Chaque segment élémentaire 51 ou 52 est continu selon sa circonférence, c'est-à-dire ne comporte aucune discontinuité, telle qu'une fente radiale complète. Chaque segment élémentaire 51 ou 52 est délimité entre deux bordures circulaires, à savoir une bordure circulaire extérieure 51a ou 52a, et une bordure intérieure 51b ou 52b.

Chaque segment élémentaire 51 ou 52 comporte une pluralité de fentes ou encoches 51c ou 52c radiales, régulièrement réparties selon la circonférence dudit segment, s'étendant radialement, en suivant la circonférence dudit segment, alternativement à partir de la bordure intérieure 51b ou 52b, et de la bordure extérieure 51a ou 52a. Comme montré par la figure 1, représentant la position angulaire relative des deux segments dans leur disposition liée l'un à l'autre, par exemple par des points de soudure, les deux segments élémentaires 51 et 52 sont décalés angulairement l'un par rapport à l'autre, de telle sorte que chaque fente 51c ou 52c de l'un est étanchée par un secteur plein 51d ou 52d de l'autre, situé entre deux fentes radiales.

Comme montré par les figures 2 et 3, la largeur radiale, c'est-à-dire la dimension radiale comprise entre les deux bordures circulaires, par exemple 52a et 52b du segment élémentaire 52, est relativement importante, et par exemple au moins égale à 1/8ème du rayon du cylindre 4.

En définitive, chaque segment élémentaire selon l'invention se présente sous la forme d'une galette annulaire relativement mince, présentant deux faces planes, délimitant entre elles deux chants cylindriques, l'un intérieur et l'autre extérieur.

De manière non représentée, des moyens de calage et liaison angulaire, par exemple un point de soudure ou un ergot prévu sur un segment élémentaire 51, en relation avec un trou prévu dans l'autre segment élémentaire 52, sont ménagés au niveau des faces planes desdits segments, respectivement au contact l'une de l'autre. De cette manière, il est possible de s'assurer que chaque fente 51c ou 52c d'un segment 51 ou 52 est recouverte par un secteur 51d ou 52d d'un autre segment, situé entre deux fentes radiales.

Comme représenté plus particulièrement à la figure 3, la bordure intérieure 51b ou 52b d'un segment élémentaire a un rayon légèrement supérieur au rayon du bord intérieur de la gorge annulaire 4a, de manière à ménager un interstice de fuite, notamment pour la lubrification sous pression du segment multiple.

Les segments précédemment décrits peuvent être usinés à la demande, par exemple par découpe laser dans une bande d'acier traité, et ceci sans outillage spécialisé. Ensuite, les faces planes de chaque segment sont rodées avec une grande précision, et les diamètres utiles, intérieur et/ou extérieur, sont obtenus par rectification ou rodage de leurs chants intérieur et/ou extérieur, avec des paquets de segments élémentaires empilés.

Bien entendu, selon l'invention, le segment multiple précédemment décrit peut comprendre un nombre supérieur de segments élémentaires, disposés au contact les uns des autres, ou séparés les uns des autres par des entretoises appropriées.

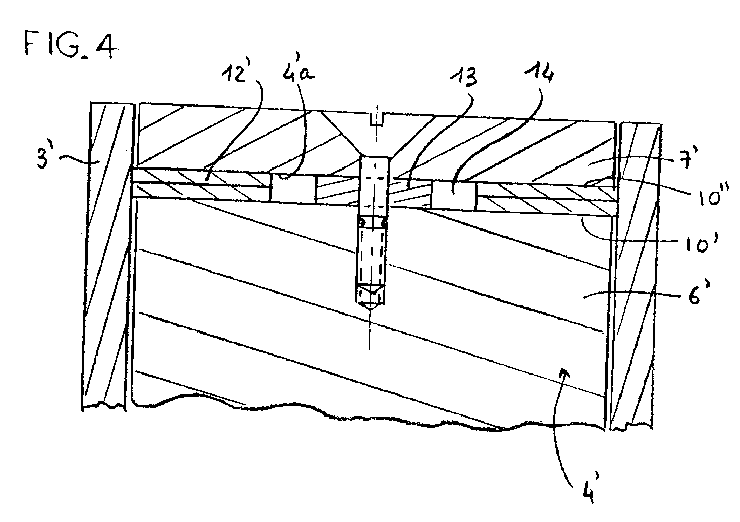

On a représenté en variante, à la figure 4, un piston 4' fait en deux parties 6' et 7' dont les faces 10' et 10" en regard sont planes, sans décrochement, en étant rodées plan avec une très grande précision et un très bon état de surface. Entre les faces 10' et 10" est placée une cale 13 dont l'épaisseur est celle du segment double 12', en déterminant ainsi la gorge 4'a destinée à recevoir le segment double 12'.

Dans l'exemple représenté à la figure 4 le segment 12' assure une étanchéité avec le cylindre 3' par son diamètre extérieur, et la cale 13 se monte alors à l'intérieur du segment 12'.

Si le segment doit assurer une étanchéité sur son diamètre intérieur, la cale se montera alors à l'extérieur du segment.

L'excellent état de surface des faces en regard 10' et 10" des parties 6' et 7' du piston 4' permet, avec la cale 13, de règler le jeu du segment 12' avec une très grande précision (de l'ordre de 5 microns). Cette disposition est particulièrement avantageuse parce qu'elle permet de placer au montage, dans l'anneau 14 restant libre entre la cale 13 et le segment 12', un lubrifiant qui reste captif.

Ce faible jeu du segment 12' ne permet pas à la pression d'explosion de passer derrière le segment, de sorte que la pression du segment sur le cylindre est constante sur toute la course du segment.

## Revendications

1. Machine (1) comportant un corps (2) avec au moins un cylindre (3), au moins un piston (4) monté dans l'alésage du cylindre et comportant au moins une gorge annulaire (4a) dans laquelle est disposé un segment (51,52) annulaire d'étanchéité, le dit piston comprenant deux parties (6,7) montées l'une sur l'autre de manière amovible (8), déterminant entre elles un plan de joint (10), perpendiculaire à l'axe (11) du piston (4) et du cylindre (3), avec une gorge annulaire (4a) contenant le plan de joint (10) et le dit segment annulaire d'étanchéité comportant une rondelle pourvue de fentes radiales borgnes, régulièrement alternées et espacées débouchant une fois sur le diamètre intérieur, puis sur le diamètre extérieur et ainsi de suite pour découper uniformément toute la sur'face de la rondelle, caractérisé en ce que le segment aqnnulaire d'étanchéité est un segment multiple (12) formant bague continue d'étanchéité et comprenant un empilement d'au moins deux rondelles élémentaires (51 et 52) d'étanchéité pourvues chacune des dites fentes radiales borgnes, les dites rondelles élémentaires étant liées angulairement l'une à l'autre, continues selon leurs circonférences respectives, et délimitées chacune entre deux bordures circulaires (51a,51b,52a,52b), le dit segment multiple (2) étant monté à plat de manière libre en rotation dans la gorge (4a) entre les deux parties (6,7) du piston, et les dites rondelles (51 et 52) étant placées l'une sur l'autre et positionnées angulairement l'une par rapport à l'autre pour que les fentes (51c ou 52c) de l'une soient fermées par les parties pleines (51d ou 52d) de l'autre, de façon à former une étanchéité continue sur la circonférence du diamètre intérieur ou du diamètre extérieur du segment multiple (51,52) ainsi formé, le positionnement angulaire d'une rondelle (51) par rapport à l'autre rondelle (52) étant obtenu par tout moyen mécanique, de préférence par un ou plusieurs points de soudure laser ou autre.

2. Segment d'étanchéité annulaire (51,52) pour machine, comprenant une rondelle pourvue de fentes radiales borgnes régulièrement alternées et espacées débouchant une fois sur le diamètre intérieur, puis sur le diamètre extérieur et ainsi de suite pour découper uniformément toute la surface de la rondelle, caractérisé en ce qu'il constitue un segment d'étanchéité multiple comprenant un empilement d'au moins deux rondelles élémentaires d'étanchéité (51,52) liées angulairement l'une à l'autre, continues selon leurs circonférences respectives et délimitées chacune entre deux bordures circulaires (51a,51b,52a,52b), les dites rondelles (51,52) étant pourvues des dites fentes radiales borgnes (51c,52c), étant placées l'une sur l'autre et positionnées angulairement l'une par rapport à l'autre pour que les fentes (51c ou 52c) de l'une soient fermées par les parties pleines (51d ou 52d) de l'autre, de façon à former une étanchéité continue sur la circonférence du diamètre intérieur ou du diamètre extérieur du segment multiple (51,52) ainsi formé, le positionnement angulaire d'une rondelle (51) par rapport à l'autre rondelle (52) étant obtenu par tout moyen mécanique, de préférence par un ou plusieurs points de soudure laser ou autre, chaque rondelle (51 ou 52) étant découpée dans un matériau élastique comme par exemple un acier à ressorts, cet acier traité avant ou après découpe assurant l'élasticité propre à chaque rondelle (51 ou 52) qui compose un segment multiple, et cette élasticité permettant une flexion élastique entre chaque fente (51c, 52c) et cette flexion élastique absorbant les dilatations et les écarts de diamètres entre le diamètre à étancher et le diamètre correspondant du segment.

3. Segment multiple (51,52) selon la revendication 2, caractérisé en ce que les faces de chaque rondelle (51 ou 52) sont finies avec une grande précision avant assemblage et en ce que le segment multiple obtenu après assemblage des rondelles (51,52) est rôdé pour obtenir l'état de surface recherché et un parallélisme parfait des deux faces extérieures de la galette annulaire ainsi obtenue.

4. Segment multiple (51,52) selon la revendication 2 ou 3, caractérisé en ce que la précision d'usinage du segment (51,52) comme des faces de la gorge (4a) permet le montage du segment (51,52) presque sans jeu en gardant le segment libre dans sa gorge.

5. Segment multiple (51,52) selon la revendication 4, caractérisé en ce que le jeu important existant en fond de gorge (4a), entre le fond de la gorge (4a) et le diamètre correspondant du segment (51,52) en place dans la gorge (4a), forme un anneau étanche qui est utilisé comme réservoir de lubrifiant ou pour établir une circulation d'huile sans pression autour ou à l'intérieur du segment (51,52).

6. Segment multiple (51,52) selon les revendications 2 à 5, caractérisé en ce que la pression du segment (51,52) sur la circonférence du diamètre à étancher par le segment est obtenue avec du serrage donné par la rectification de précision du diamètre intérieur ou du diamètre extérieur d'un segment multiple (51,52) assemblé.

7. Segment multiple (51,52) selon la revendication 6, caractérisé en ce que pour assurer une étanchéité sur un arbre, on rectifie le diamètre intérieur du segment (51,52) assemblé avec du serrage par rapport au diamètre de cet arbre, le diamètre extérieur du segment (51,52) restant brut.

8. Segment multiple (51,52) selon la revendication 6, caractérisé en ce que pour obtenir une étanchéité avec un cylindre (3) on rectifie le diamètre extérieur du segment (51,52) assemblé avec du serrage par rapport au diamètre du cylindre (3), le diamètre intérieur du segment restant brut.

9. Segment multiple (51,52) selon les revendications 2 à 8, caractérisé en ce que les fentes (51c,52c) sont obtenues de préférence par découpe laser dans un acier traité et en ce que la somme des largeurs de ces fentes est supérieure au jeu nécessaire à la coupe d'un segment classique pour lui permettre de se dilater.

10. Machine selon la revendication 1, caractérisée en ce que les deux parties (6',7') du piston (4') montées l'une sur l'autre ont leurs surfaces (10',10") en regard planes, la dite gorge annulaire (4'a) étant déterminée par une cale (13) serrée entre les dites deux parties (6', 7') du piston (4') et dont l'épaisseur est identique à celle du dit segment multiple (12').

## Patentansprüche

1. Maschine (1) bestehend aus einem Rumpf (2) mit mindestens einem Zylinder (3), mit mindestens einem Kolben (4), der in die Zylinderbohrung montiert ist und mindestens eine Kolbenringnut (4a) aufweist, in der ein Dichtungsringsegment (51, 52) angebracht ist, aus besagtem Kolben, der aus zwei übereinanderliegenden, abnehmbaren Teilen (8) besteht, die miteinander eine Trennfläche (10) ergeben, und dies senkrecht zur Achse (11) des Kolben (4) und des Zylinders (3), mit einer Ringnut (4a) ausgestattet mit der Trennfläche (10) und besagtem Dichtungsringsegment, das über einer Scheibe mit blinden Radialschlitzen, die in regelmässiger Abwechslung und in regelmässigen Abständen angeordnet sind, die sich einmal auf den Innnendurchmesser öffnen, dann auf den Aussendurchmesser und dies in ständiger Abwechslung, sodass die Oberfläche der Scheibe gleichmässig zugeschnitten wird, mit der Eigenheit, dass das Dichtungsringsegment ein multiples Segment (12) ist, das einen durchgehenden Dichtungsring bildet und aus der Übereinanderschichtung von mindestens zwei Elementarscheibchen (51 und 52) besteht, wovon jedes mit besagten blinden Radialschlitzen ausgestattet ist, wobei besagte Elementarscheiben im Winkel miteinander verbunden sind, kontinuierlich je nach ihrem entsprechenden Umfang, und jedes zwischen zwei Ringrändem (51 a, 51 b, 52 a, 52 b) abgegrenzt; dabei ist das besagte multiple Segment (2) flach und in der Kolbenringnut (4 a) frei drehend zwischen den zwei Kolbenteilen (6, 7) montiert und besagte Scheibchen (51 und 52) übereinander und zueinander im Winkel angebracht, damit die Schlitze (51 c oder 52 c) des einen von den gefüllten Teilen (51 d oder 52 d) des anderen so geschlossen werden, dass auf dem Umfang des inneren Durchmessers oder des äusseren Durchmessers des somit gebildeten multiplen Segments (51, 52) eine durchgehende Dichtung zustandekommt, wobei die im Winkel stehende Anordnung der einen Scheibe (561) im Verhältnis zur anderen (52) auf jedwede mechanische Weise erreicht wird, vorzugsweise durch einen oder mehrere mit Laser oder sonstwie verschweisste Punkte.

2. Ein Maschinen-Dichtungsringsegment (51, 52), bestehend aus einer Scheibe mit regelmässig abwechselnden und in gleichen Abständen angeordneten blinden Radialschlitzen, die einmal auf den Innenumfang münden, dann auf den Aussenumfang und dies kontinuierlich, um die ganze Oberfläche der Scheibe regelmässig aufzuteilen, mit der Eigenschaft, dass es ein multiples Dichtungssegment ergibt bestehend aus der Übereinanderschichtung von mindestens zwei Elementardichtungsscheiben (51, 52), die im Winkel ineinander greifen, kontinuierlich je nach ihren entsprechenden Umfängen und jede jeweils abgegrenzt zwischen zwei Ringrändern (51 a, 51 b, 51 c, 51 d), wobei besagte Scheiben (51, 52) mit besagten blinden Radialschlitzen (51 c, 52 c) ausgestattet sind und dabei die eine auf der anderen liegt und die eine im Winkel zur anderen angeordnet ist, damit diese Schlitze (51 c oder 52 c) der einen durch die vollen Teile (51 d oder 52 d) der anderen so geschlossen werden, dass dadurch eine kontinuierliche Dichtigkeit auf dem Umfang des Innendurchmessers oder des Aussendurchmessers des so gebildeten multiplen Segments (51, 52) erzielt wird, wobei die winkelige Anordnung einer Scheibe (51) im Verhältnis zur anderen Scheibe (52) auf irgendeine mechanische Weise erreicht wird, vorzugsweise durch einen oder mehrere mit Laser oder sonstwie verschweisste Punkte. Dabei wird jede Scheibe (51 oder 52) aus einem elastischen Material hergestellt, wie z.B. aus Federstahl. Dieser vor oder nach dem Schnitt behandelte Stahl verleiht jeder der Scheiben (51 oder 52), die ein multiples Segment ergibt, die notwendige Elastizität, welche die notwendige elastische Biegung zwischen jedem Schlitz (51 c, 52 c) ermöglicht, wobei dieser Federung die Dilatationen und Durchmesserabweichungen zwischen dem abzudichtenden Durchmesser und dem entsprechenden Durchmesser des Segments auffängt.

3. Multiples Segment (51, 52) entsprechend der Patentanforderung 2, mit der Eigenheit, dass die Flächen jeder Scheibe (51 oder 52) vor dem Montieren mit grösster Genauigkeit gefertigt werden und dass das multiple Segment, das nach dem Zusammenbau der Scheiben (51, 52) hergestellt worden ist, erst einmal eingefahren wird um den gewünschten Oberlächenschliff und eine vollkommene Parallelität der zwei Aussenflächen der so erhaltenen Ringplatte zu erzielen.

4. Multiples Segment (51, 52) nach Patentanforderung 2 oder 3, mit der Eigenheit, dass die Präzision der Segmentfertigung (51, 52), sowie jener der Oberflächen der Kolbenringnut (4 a) ein fast spielfreies Montieren des Segments erlaubt, wobei aber das Segment in der Ringnut freibleibt.

5. Multiples Segment (51, 52) nach Patentanforderung 4, mit der Besonderheit, dass der beträchtliche Spielraum hinten in der Nut, zwischen dem hinteren Teil der Nut (4 a) und dem entsprechenden Durchmesser des Segments (51, 52) innerhalb der Nut (4 a) einen Dichtungsring bildet, der als Brennstoffspeicher oder als Ölkreislauf dient, ohne dadurch Druck um das Segment (51, 52) herum oder innerhalb des Segments zu bewirken.

6. Multiples Segment (51, 52) nach den Patentanforderungen 2 bis 5, mit der Besonderheit, dass der Druck des Segments (51, 52) auf den durch das Segment abzudichtenden Durchmesserumfang erzielt wird durch das anhand von Druck erreichte Präzisionsschleifen des Innendurchmessers oder des Aussendurchmessers eines montierten multiples Segments (51, 52).

7. Multiples Segment (51, 52) nach der Patentanforderung 6, mit der Besonderheit, dass zum Erreichen der Dichtigkeit zu einer Achse, der Innendurchmesser des mit Druck auf den Durchmesser dieser Achse montierten Segments (51, 52) eingeschliffen wird, wobei der Aussendurchmesser des Segments (51, 52) unbearbeitet verbleibt.

8. Multiples Segment (51, 52) nach der Patentanforderung 6, mit der Eigenheit, dass - zum Erreichen der Dichtigkeit mit einem Zylinder (3) - der Aussendurchmesser des mit Druck auf den Zylinderdurchmesser montierten Segments (51, 52) eingeschliffen wird, wobei der Segmentinnendurchmesser unbehandelt bleibt.

9. Multiples Segment (51, 52) nach den Patentanforderungen 2 bis 8, mit der Eigenheit, dass die Schlitze (51 c, 52 c) vorzugsweise mit Laserstrahl in einen behandelten Stahl geschnitten werden und dass die Summe der Breiten dieser Schlitze über das notwendige Mass für den Schnitt eines klassischen Segments hinausgehen, um eine Dilatation zu ermöglichen.

10. Maschine nach Patentanforderung 1 mit der Eigenheit, dass die einander zugekehrten Flächen der zwei übereinanderliegenden Teile (6', 7') des Kolben (4') eben sind, wobei besage Kolbenringnut (4'a) durch eine zwischen die zuvor erwähnten Teile (6', 7') des Kolben (4') eingezwängte Keilscheibe (13) festgelegt wird und deren Dicke identisch ist mit der des besagten multiplen Segments (12').

## Claims

1. Machine (1) comprising a body (2) with at least one cylinder (3), at least one piston (4) mounted in the bore of the cylinder and comprising at least one annular throat (40) housing an annular sealing segment (51,52), said piston includes two portions (6,7) mounted with one on the other and able to move (8) and collectively determining a parting plane (10) perpendicular to the axis (11) of the piston (4) and the cylinder (3), with an annular throat (4a) containing the parting plane (10), and said annular sealing segment comprising a washer provided with dummy radial slits regularly staggered and spaced opening once onto the inner diameter and then onto the outer diameter and so on, so as to uniformly cut the entire surface of the washer, characterized in that the annular sealing segment is a multiple segment (12) forming a continuous sealing ring and including a stacking of at least two elementary sealing washers, (51 and 52), each provided with said dummy radial slits, said elementary washers being angularly linked to each other and continuous along their respective circumferences and each delimited between two circular edges, (51a,51b,52a,52b), said multiple segment being mounted flat so as to be free in rotation in the throat (4a) between the two portions (6,7) of the piston and said two washers (51 and 52) being placed with one on the other and positioned angularly with respect to each other so that the slits (51c or 52c) of one of them are closed by the full portions (51d or 52d) of the other, so as to form continuous imperviousness on the circumference of the inner diameter or outer diameter of the multiple segment (51,52) formed, the angular positioning of one washer (51) with respect to the other washer (52) being obtained by any mechanical device, preferably by one or several laser weld points or the like.

2. Annular sealing segment (51,52) for a machine, including a washer provided with dummy radial slits regularly staggered and spaced opening once onto the internal diameter and then onto the outer diameter and so on so as to uniformly cut the entire surface of the washer, characterized in that it consists of a multiple sealing segment including a stacking of at least two elementary sealing washers (51,52) angularly linked to each other and continuous along their respective circumferences and each delimited between two circular edges (51a,51b,52a,52b), said washers (51,52) being provided with said dummy radial slits (51c,52c) and being placed with one on the other and positioned angularly with respect to each other so that the slits (51c or 52c) of one of them are closed by the full portions (51d or 52d) of the other so as to form continuous imperviousness on the circumference of the inner diameter or outer diameter of the multiple segment (51,52) formed, the angular positioning of one washer (51) with respect to the other washer (52) being obtained by any mechanical device, preferably by one or several laser weld points or the like, each washer (51 or 52) being cut from a resilient material such as a spring steel, this treated steel before or after cutting providing with its own elasticity each washer (51 or 52) composing a multiple segment, this elasticity permitting elastic bending between each slit (51c,52c) and absorbing the expansions and diameter diferences between the diameter to be sealed and the corresponding diameter of the segment.

3. Multiple segment (51,52) according to claim 2, characterized in that the faces of each washer (51 or 52) are finished with great precision prior to assembling and in that the multiple segment obtained after assembling of the washers (51,52) is honed so as to obtain the sought-after surface quality and a perfect parallelism of the two outer faces of the annular blank obtained.

4. Multiple segment (51,52) according to claim 2 or 3, characterized in that the machining precision of the segment (51,52), like the faces of the throat (4a), allows for mounting of the segment (51,52) with hardly any play, thus keeping the segment free in this throat.

5. Multiple segment (51,52) according to claim 4, characterized in that the significant play existing at the bottom of the throat (4a), between the bottom of the throat (4a) and the corresponding diameter of the segment (51,52) in place in the throat (4a) forms a sealing ring used as a lubricant tank or to establish a circulation of oil without pressure around or inside the segment (51,52).

6. Multiple segment (51,52) according to claims 2 to 5, characterized in that the pressure of the segment (51,52) on the circumference of the diameter to be sealed by the segment is obtained with the chucking given by the precision adjustment of the inner diameter or outer diameter of an assembled multiple segment (51,52).

7. Multiple segment (51,52) according to claim 6, characterized in that, so as to provide imperviousness on a shaft, the inner diameter of the assembled segment (51,52) is adjusted with chucking with respect to the diameter of this shaft, the outer diameter of the segment (51,52) remaining unadjusted.

8. Multiple segment (51,52) according to claim 6, characterized in that, so as to obtain imperviousness with a cylinder (3), the outer diameter of the assembled segment (51,52) is adjusted with chucking with respect to the diameter of the cylinder (3), the inner diameter of the segment remaining unadjusted.

9. Multiple segment (51,52) according to claims 2 to 8, characterized in that the slits (51c,52c) are preferably obtained by laser cutting from a treated steel and wherein the sum of the widths of these slits is greater than the play required for the cutting of a conventional segment so as to allow it to expand.

10. Machine according to claim 1, characterized in that the two portions (6',7') of the piston (4') with one mounted on the other have their opposing surfaces (10',10") flat, said annular throat (4'a) being determined by a shim (13) clamped between said two portions (6',7') of the piston (4') and whose thickness is identical to that of said multiple segment (12').
